(19) Europäisches Patentamt
European Patent Office
Office européen des brevets

(11) **EP 3 103 550 B1**

(12) **EUROPEAN PATENT SPECIFICATION**

(45) Date of publication and mention
of the grant of the patent:
**23.10.2024 Bulletin 2024/43**

(21) Application number: **15745863.9**

(22) Date of filing: **02.02.2015**

(51) International Patent Classification (IPC):
**B01J 29/44** (2006.01)     **B01D 53/94** (2006.01)
**B01J 29/40** (2006.01)     **B01J 29/48** (2006.01)
**B01J 29/67** (2006.01)     **B01J 29/69** (2006.01)
**F01N 3/08** (2006.01)     **F01N 3/10** (2006.01)

(52) Cooperative Patent Classification (CPC):
**B01J 29/69; B01D 53/9418; B01J 29/44;**
**B01J 29/46; B01J 29/48; B01J 29/67; F01N 3/08;**
**F01N 3/10;** B01D 2251/21; B01D 2255/104;
B01D 2255/209; B01D 2255/2096; B01D 2255/50;
B01D 2258/012; F01N 2610/03;     (Cont.)

(86) International application number:
**PCT/JP2015/052811**

(87) International publication number:
**WO 2015/119069 (13.08.2015 Gazette 2015/32)**

(54) **METHOD FOR PURIFYING COMBUSTION EXHAUST GAS**

VERFAHREN ZUR REINIGUNG VON VERBRENNUNGSABGASEN

PROCÉDÉ DE PURIFICATION DES GAZ D'ÉCHAPPEMENT D'UN MOTEUR A COMBUSTION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **07.02.2014 JP 2014022097**

(43) Date of publication of application:
**14.12.2016 Bulletin 2016/50**

(73) Proprietor: **Hitachi Zosen Corporation**
**Osaka-shi, Osaka 559-8559 (JP)**

(72) Inventors:
• **SHONO, Emi**
**Osaka-shi**
**Osaka 559-8559 (JP)**
• **SHIMIZU, Kana**
**Osaka-shi**
**Osaka 559-8559 (JP)**
• **HIKAZUDANI, Susumu**
**Osaka-shi**
**Osaka 559-8559 (JP)**

(74) Representative: **LLR**
**2, rue Jean Lantier**
**75001 Paris (FR)**

(56) References cited:
EP-A1- 1 314 476     EP-A1- 3 124 115
JP-A- 2003 284 956    JP-A- 2003 284 956
JP-A- 2004 322 077    JP-A- 2004 358 454
JP-A- 2004 358 454    JP-A- 2008 155 133
JP-A- H02 307 533

(52) Cooperative Patent Classification (CPC): (Cont.)
Y02T 10/12

**Description**

Technical Field

The present invention relates to a method for purifying a combustion exhaust gas, for removing a nitrogen oxide (NOx) in a combustion exhaust gas discharged from an internal combustion engine, such as a marine diesel engine.

Background Art

For removing a nitrogen oxide in a combustion exhaust gas of an internal combustion engine, such as a marine diesel engine, an ammonia selective catalytic reduction method is mainly used. The ammonia selective catalytic reduction method is such a method that a denitration catalyst containing vanadium and titania as a major component is used as a catalyst, and ammonia is used as a reducing agent.

However, in an internal combustion engine, such as a marine diesel engine, a C heavy oil or the like is combusted in the internal combustion engine, as different from an automobile diesel engine, and since a C heavy oil or the like contains a sulfur component, a sulfur oxide is generated along with a nitrogen oxide in the combustion exhaust gas. In the case where the combustion exhaust gas of this type is denitrated by an ammonia selective catalytic reduction method, a sulfur oxide and ammonia are reacted with each other in the combustion exhaust gas to form ammonium sulfate ($(NH_4)_2SO_4$). Furthermore, in an internal combustion engine, such as a marine diesel engine, the temperature of the exhaust gas after passing through a supercharger becomes as low as approximately 250°C, and thus there may be a problem that ammonium sulfate formed through reaction of the sulfur oxide in the exhaust gas and ammonia as a reducing agent is deposited on the exhaust path, which causes clogging of the heat exchanger.

On the other hand, as a reductive removing method using a reducing agent other than ammonia, for example, PATENT DOCUMENT 1 shown below describes a method of using a catalyst containing zeolite supported on a metal and an alcohol as a reducing agent.

PATENT DOCUMENT 2 shown below describes that a denitration catalyst is disposed in an exhaust gas processing flow path that is branched into two paths, and while one of the exhaust gas processing flow path is closed to terminate the supply of the exhaust gas, whereas the exhaust gas processing is continued in the other of the exhaust gas processing flow path, the denitration catalyst layer of the exhaust gas processing flow path where the supply of the exhaust gas is terminated is heat-treated on the spot at a temperature of from 350 to 800°C, thereby recovering the deteriorated denitration capability thereof. JP2003 284956A and EP1314476 A1 disclose denitrification catalysts.

Citation List

Patent Documents

PATENT DOCUMENT 1: JP-A-2004-358454
PATENT DOCUMENT 2: JP-A-2006-220107

Summary of the Invention

Problems that the invention is to Solve

However, the denitration catalyst described in PATENT DOCUMENT 1 requires a large amount of the reducing agent, and thereby the cost is unavoidably increased. Furthermore, there may be a problem that in the contact of the catalyst containing zeolite supported on a metal with an alcohol, a side reaction may occur in addition to the initial denitration reaction, a side reaction product due to the side reaction causes deposition of so-called coke (carbon) on the surface of the catalyst, which deteriorates the denitration capability with the lapse of time.

PATENT DOCUMENT 2 may have a problem that in the case where the amount of the reducing agent is large, a carbon compound and the like are accumulated on the catalyst with the lapse of time, which deteriorates the denitration capability.

An object of present invention is to solve the problems in the ordinary techniques, and to provide a catalyst for purifying a combustion exhaust gas and a method for purifying a combustion exhaust gas, capable of efficiently removing a nitrogen oxide in an exhaust gas in a relatively low temperature range discharged from an internal combustion engine, such as a marine diesel engine, with a smaller amount of the reducing agent than the ordinary techniques.

Means of Solving the Problems

For achieving the object, the invention is a method for purifying a combustion exhaust gas of claim 1 containing making a combustion exhaust gas having an alcohol added thereto as a reducing agent, into contact with a denitration catalyst containing a catalyst support containing zeolite, having supported thereon at least one metal selected from the group consisting of Bi and Pb, at a temperature of from 200 to 300°C, so as to remove a nitrogen oxide in the exhaust gas. The alcohol used as a reducing agent may be methanol or ethanol. the catalyst support may be a honeycomb structure formed with an inorganic fiber sheet (including inorganic fiber paper) having supported thereon zeolite.

The inorganic fiber sheet can be a glass fiber sheet or a ceramic fiber sheet.

The invention of claim 2 is the method for purifying a combustion exhaust gas according to claim 1, wherein the reducing agent is added to the combustion exhaust gas at a ratio of from 0.1 to 4 in terms of concentration ratio of (reducing agent)/(NOx in the exhaust gas).

Advantageous Effects of Invention

According to the invention, such an effect is exerted that a nitrogen oxide in an exhaust gas in a relatively low temperature range discharged from an internal combustion engine, such as a marine diesel engine, can be efficiently removed with a smaller amount of the reducing agent than the ordinary techniques.

Brief Description of the Drawings

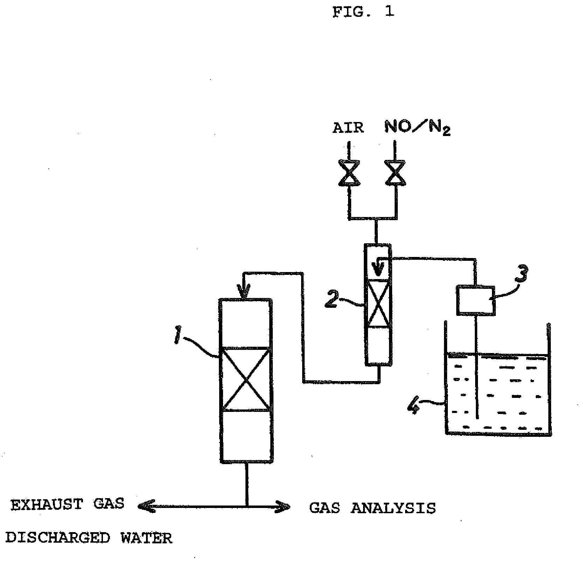

Fig. 1 is a flow diagram showing an example of a test equipment used for a catalyst performance test in the examples of present invention.

Mode for Carrying Out the Invention

Embodiments of present invention will be described below, but the invention is not limited thereto.

The catalyst for purifying a combustion exhaust gas used in the present invention is a catalyst for purifying a combustion exhaust gas for removing a nitrogen oxide (NOx) in a combustion exhaust gas discharged from an internal combustion engine, such as a diesel engine, an oil burning engine, and a gas turbine, and is a catalyst used in a purification method of a combustion exhaust gas of removing a nitrogen oxide in a combustion exhaust gas by making the catalyst into contact with the combustion exhaust gas having an alcohol added thereto as a reducing agent, in which the catalyst contains a catalyst support containing zeolite, having supported thereon at least one metal selected from the group consisting of Bi and Pb.

In the catalyst for purifying a combustion exhaust gas, the zeolite is not particularly limited as far as the denitration capability can be exhibited, but the use of zeolite having a structure having a high acid strength, such as MOR zeolite, requires a large amount of the reducing agent, and for exhibiting the denitration capability in a low temperature range around 200°C, the reducing agent is difficult to react with zeolite having a weak acid strength, such as β zeolite and Y zeolite. Accordingly, it is used a MFI zeolite or FER zeolite, which has a structure that is relatively weaker in acid strength than MOR zeolite but is stronger in acid strength than β zeolite and Y zeolite.

In the catalyst for purifying a combustion exhaust gas of present invention, the metal supported on the zeolite is at least one metal selected from the group consisting of Bi and Pb, and examples of the precursor compounds thereof used include an inorganic acid salt (such as, a nitrate salt and a chloride) and an organic acid salt (such as an acetate salt) . The supporting method of the catalyst metal may suffice to exhibit the denitration capability, and examples thereof include an ion exchange method and an impregnation supporting method. Examples of the ion exchange method include a method of suspending zeolite in an aqueous solution containing a precursor compound of at least one metal selected from the group consisting of Bi and Pb, taking out from the aqueous solution the zeolite having the catalyst metal bonded thereto through ion exchange, drying and then baking the zeolite.

In the catalyst for purifying a combustion exhaust gas of present invention, the alcohol as a reducing agent is not particularly limited as far as the alcohol has a reducing capability at the temperature in the reducing process of the combustion exhaust gas, and methanol and ethanol, which are alcohols having a small carbon number, are preferably used.

The shape of the catalyst for purifying a combustion exhaust gas of present invention may be arbitrarily selected depending on the reactor and the gas flowing conditions applied, for example, a granular shape, a pellet shape, a honeycomb shape, and a plate shape.

For example, in the case where the denitration catalyst is disposed in a gas duct of a marine diesel engine or the like having a high air-fuel ratio, the catalyst support preferably contains a honeycomb structure formed with an inorganic fiber sheet (including inorganic fiber paper) having supported thereon zeolite. In particular, the inorganic fiber sheet is preferably a glass fiber sheet or a ceramic fiber sheet.

For producing the denitration catalyst of present invention with a honeycomb structure formed of an inorganic fiber sheet as a substrate, for example, zeolite is suspended in an aqueous solution containing a precursor compound of at least one metal selected from the group consisting of Bi and Pb, so as to provide a catalyst component-containing slurry containing the zeolite having the catalyst metal bonded thereto through ion exchange, and the honeycomb structure formed of an inorganic fiber sheet as a substrate is immersed in the slurry, taken out from the slurry, then dried, and baked at 550°C or less.

In the method for producing the denitration catalyst of present invention, the honeycomb structure means an integrated structure that has plural through holes (cells) that are formed by partition walls and are capable of permitting passage of an exhaust gas, and the partition walls, and the cross sectional shape of the through holes (i.e., the cross sectional shape of the cells) is not particularly limited, examples of which include a circular shape, a circular arc shape, a square shape, a rectangular shape, and a hexagonal shape.

In the method for producing a denitration catalyst of present invention, examples of the method of immersing the honeycomb structure as a substrate in the catalyst component-containing slurry include a method (A) of immersing the honeycomb structure as a substrate, which has been produced by building the inorganic fiber sheet into the honeycomb structure in advance, and a method (B) of immersing the glass fiber sheet as a material of the honeycomb structure as a substrate, in the form of a sheet.

In the method (A), the denitration catalyst may be produced in such a manner that zeolite is suspended in an aqueous solution containing a precursor compound of at least one metal selected from the group consisting of Bi and Pb, so as to provide a catalyst component-containing slurry containing the zeolite having the catalyst metal bonded thereto through ion exchange, and the honeycomb structure as a substrate, which has been produced by building the inorganic fiber sheet into the honeycomb structure in advance, is immersed in the slurry, taken out from the slurry, then dried under condition of from 100 to 200°C for from 1 to 2 hours, and baked under condition of from 300 to 550°C for from 1 to 4 hours, thereby bonding the zeolite supporting at least one catalyst metal selected from the group consisting of Ag, Bi, and Pb to the honeycomb structure substrate.

In the method (A), the inorganic fiber sheet is preferably a glass fiber sheet or a ceramic fiber sheet.

In the method (B), on the other hand, the denitration catalyst may be produced with a honeycomb structure formed of a glass fiber sheet as a substrate in such a manner that: zeolite is suspended in an aqueous solution containing a precursor compound of at least one metal selected from the group consisting of Bi and Pb, so as to provide a catalyst component-containing slurry containing the zeolite having the catalyst metal bonded thereto through ion exchange; the catalyst-containing slurry is coated on a glass fiber sheet; then the catalyst-containing slurry-coated glass fiber sheet is molded with a corrugating mold and a pressing jig; the corrugated catalyst-containing slurry-coated glass fiber sheet thus molded is dried under condition of from 100 to 200°C for from 1 to 2 hours, and released from the mold; the flat catalyst-containing slurry-coated glass fiber sheet that has not been molded is dried under condition of from 100 to 200°C for from 1 to 2 hours; the corrugated catalyst-containing slurry-coated glass fiber sheet and the flat catalyst-containing slurry-coated glass fiber sheet are baked under condition of from 300 to 550°C for from 1 to 4 hours, so as to form a catalyst-supported flat glass fiber sheet and a catalyst-supported corrugated glass fiber sheet, having bonded thereto the zeolite supporting at least one catalyst metal selected from the group consisting ofBi and Pb; and the catalyst-supported flat glass fiber sheet and the catalyst-supported corrugated glass fiber sheet thus baked are alternately laminated to form a catalyst-supported honeycomb structure.

The method for purifying a combustion exhaust gas of present invention contains making a combustion exhaust gas having an alcohol added thereto as a reducing agent, into contact with a denitration catalyst containing a catalyst support containing zeolite, having supported thereon at least one metal selected from the group consisting of Bi and Pb, at a temperature of from 200 to 300°C, so as to remove a nitrogen oxide in the exhaust gas.

In the method for purifying a combustion exhaust gas of present invention, the reducing agent is preferably added to the combustion exhaust gas at a ratio of from 0.1 to 4, and more preferably from 1 to 4, in terms of concentration ratio of (reducing agent)/(NOx in the exhaust gas). The concentration ratio of (reducing agent)/(NOx in the exhaust gas) herein depends on the denitration rate, and for example, in the case where the demanded denitration rate is 30% or less, the method can be achieved even with a concentration ratio of (reducing agent)/(NOx in the exhaust gas) of from 0.1 to 1.

According to the invention, a nitrogen oxide in an exhaust gas in a relatively low temperature range discharged from an internal combustion engine, such as a marine diesel engine, can be efficiently removed with a smaller amount of the reducing agent than the ordinary techniques.

Example

Examples of present invention will be described along with comparative examples, but the invention is not limited to the examples. The Examples 1, 2, 7, 15 and 16 are not according to the invention and are present for illustration purposes only.

Example 1 (not according to the invention)

Preparation of Ag/MFI Zeolite Catalyst

A catalyst containing ZSM-5 (MFI) zeolite having supported thereon silver (Ag) was manufactured.

10 g of commercially available ZSM-5 (MFI) zeolite (HSZ-830NHA, a trade name, produced by Tosoh Corporation) was placed in 200 mL of a 0.1 mol (M) aqueous solution of silver nitride (Silver Nitride (I) AgNO$_3$, a trade name, produced by Kishida Chemical Co., Ltd.), and the mixture was stirred at a temperature of 80°C for 24 hours, filtered, rinsed, then dried at a temperature of 110°C for 3 hours, and further baked at a temperature of 500°C for 4 hours, thereby providing silver (Ag) ion exchanged zeolite. The catalyst has an Ag supported amount of 3.0% by weight.

A denitration catalyst performance evaluation test was performed. Fig. 1 shows the flow diagram of the performance evaluation test equipment for a denitration catalyst.

The catalyst formed of Ag/ZSM-5 (MFI) zeolite obtained above was press-molded, pulverized, and granulated to a mesh size between 28 and 14, so as to provide a pellet catalyst. The catalyst was charged in a denitration reactor (1) formed of a stainless steel reaction tube having an inner diameter of 10.6 mm in the test equipment having flow diagram shown in Fig. 1.

A gas for denitration test is introduced to the upper part of the denitration reactor (1) having the denitration catalyst charged therein, and the processed gas discharged from the lower part of the denitration reactor (1) is discharged to the exterior, a part of which is subjected to gas analysis.

The test gas introduced to the denitration reactor (1) is prepared by mixing the air and a NO/N$_2$ gas. The gas thus mixed is introduced to an upper end of an evaporator (2). An aqueous solution of an alcohol as a reducing agent is drawn from an alcohol aqueous solution tank (4) with a metering pump (3) and fed to a part close to the upper end of the evaporator (2). In the evaporator (2), the alcohol aqueous solution is evaporated by heating with a heater and fed to the denitration reactor (1) from the lower part of the evaporator (2) along with the NO/N$_2$ mixed gas. In the denitration reactor (1), the temperature thereof is changed to 200°C, 250°C, and 300°C. The denitration-processed gas discharged from the denitration reactor (1) after completing the process of denitration reaction is discharged to the exterior, a part of which is subjected to gas analysis.

An evaluation test was performed by using a test exhaust gas having a NO concentration of 1,000 ppm at a concentration ratio of (reducing agent) / (NO in the exhaust gas) of 2 by using methanol (MeOH) as a reducing agent at a concentration of 2,000 ppm under the test condition shown in Table 1 below.

Table 1

| Test Condition | |
| --- | --- |
| gas composition: NO | 1000 ppm vd |
| nitrogen concentration | balance |
| Water vapor concentration | 5.0% by volume |
| oxygen concentration | 14.0% by volume |
| gas flow rate | 1L/min |
| catalyst amount | 2g |
| space velocity | 30,000 l/h |
| reaction temperature | 250°C |

As the gas analysis at the outlet port of the reactor, the outlet port NOx concentration was measured by using a nitrogen oxide (NOx) meter. The denitration rate as the NOx removal capability of the catalyst was calculated from the measured value with the NOx meter according to the following expression (1).

$$\text{denitration rate } (\%) = (NOx_{in} - NOx_{out}) / NOx_{in} \times 100 \quad ... \quad (1)$$

The results of the evaluation test of the denitration catalyst capability are shown in Table 2 below.

Example 2 (not according to the invention)

A denitration catalyst performance evaluation test was performed under the test condition shown in Table 1 in the same manner as in Example 1, provided that the following points were changed from Example 1. In Example 2, the evaluation test was performed by using methanol (MeOH) as a reducing agent at a concentration of 4,000 ppm, and a test exhaust gas having a NO concentration of 1,000 ppm at a concentration ratio of (reducing agent)/ (NO in the exhaust gas) of 4. The results of the evaluation test of the denitration catalyst capability are shown in Table 2 below.

Examples 3 and 4

The denitration catalyst performance evaluation test corresponding to the method for purifying a combustion exhaust gas of the invention was performed under the test condition shown in Table 1 in the same manner as in Examples 1 and 2, provided that the following points were changed from Examples 1 and 2 . A denitration catalyst of Bi/MFI zeolite was produced by using bismuth nitrate (Bismuth Nitrate Pentahydrate $BiNO_3 \cdot 5H_2O$, a tradename, produced by Kishida Chemical Co., Ltd.) as the salt of the denitration catalyst metal. The Bi supported amount of the denitration catalyst was 18.1% by weight. The results of the evaluation test of the denitration catalyst capability are shown in Table 2 below.

Examples 5 and 6

The denitration catalyst performance evaluation test corresponding to the method for purifying a combustion exhaust gas of the invention was performed under the test condition shown in Table 1 in the same manner as in Examples 1 and 2, provided that the following points were changed from Example 1. A denitration catalyst of Pb/MFI zeolite was produced by using lead nitrate (Lead(II) Nitrate, a tradename, produced by Wako Pure Chemical Industries, Ltd.) as the salt of the denitration catalyst metal. The Pb supported amount of the denitration catalyst was 9.3% by weight. The results of the evaluation test of the denitration catalyst capability are shown in Table 2 below.

Example 7 (not according to the invention)

The denitration catalyst performance evaluation test corresponding to the method for purifying a combustion exhaust gas of the invention was performed under the test condition shown in Table 1 in the same manner as in Example 1, provided that the following points were changed from Example 1. A denitration catalyst of Ag/FER zeolite was produced by using commercially available ferrierite (FER) zeolite (HSZ-720NHA, a trade name, produced by Tosoh Corporation) as the zeolite, and the evaluation test was performed by using methanol (MeOH) as a reducing agent at a concentration of 1,000 ppm, and a test exhaust gas having a NO concentration of 1,000 ppm at a concentration ratio of (reducing agent)/(NO in the exhaust gas) of 1. The Ag supported amount of the denitration catalyst was 2.1% by weight. The results of the evaluation test of the denitration catalyst capability are shown in Table 2 below.

Example 8

The denitration catalyst performance evaluation test corresponding to the method for purifying a combustion exhaust gas of the invention was performed under the test condition shown in Table 1 in the same manner as in Example 3, provided that the following points were changed from Example 3. A denitration catalyst of Bi/FER zeolite was produced by using commercially available ferrierite (FER) zeolite (HSZ-720NHA, a trade name, produced by Tosoh Corporation) as the zeolite, and the evaluation test was performed by using methanol (MeOH) as a reducing agent at a concentration of 1,000 ppm, and a test exhaust gas having a NO concentration of 1,000 ppm at a concentration ratio of (reducing agent)/(NO in the exhaust gas) of 1. The Bi supported amount of the denitration catalyst was 12.6% by weight. The results of the evaluation test of the denitration catalyst capability are shown in Table 2 below.

Comparative Examples 1 to 3

For comparison, the denitration catalyst performance evaluation test corresponding to a method for purifying a combustion exhaust gas was performed in the same manner as in Example 1, provided that the following points were changed from Example 1. A denitration catalyst of Co/MFI zeolite was produced by using cobalt nitrate (Cobalt Nitrate Hexahydrate $Co(NO_3)_2 \cdot 6H_2O$, a tradename, produced by Kishida Chemical Co., Ltd.) as the salt of the denitration catalyst metal. The Co supported amount of the denitration catalyst was 3.8% by weight. The evaluation test was performed by using methanol (MeOH) as a reducing agent at the concentration ratios of (reducing agent)/(NO in the exhaust gas) shown in Table 2 below. The results of the evaluation test of the denitration catalyst capability are shown in Table 2 below.

Table 2

| | catalyst metal/ zeolite | reducing agent | reducing agent /NO concentration ratio) | denitration rate(%) | | |
|---|---|---|---|---|---|---|
| | | | | 200°C | 250°C | 300°C |
| Example 1* | Ag/MFI | MeOH | 2 | 34 | 56 | 10 |
| Example 2* | Ag/MFI | MeOH | 4 | 19 | 84 | 10 |
| Example 3 | Bi/MFI | MeOH | 2 | 58 | 39 | 10 |
| Example 4 | Bi/MFI | MeOH | 4 | 66 | 65 | 25 |
| Example 5 | Pb/MFI | MeOH | 2 | 11 | 91 | 54 |
| Example 6 | Pb/MFI | MeOH | 4 | 11 | 95 | 85 |
| Example 7* | Ag/FER | MeOH | 1 | 16 | 57 | 44 |
| Example 8 | Bi/FER | MeOH | 1 | 92 | 88 | 73 |
| Comparative Example 1 | Co/MFI | MeOH | 2 | 15 | 25 | 17 |
| Comparative Example 2 | Co/MFI | MeOH | 4 | 15 | 51 | 28 |
| Comparative Example 3 | Co/MFI | MeOH | 7 | 16 | 86 | 47 |
| *(not according to the invention) | | | | | | |

Examples 9 (not according to the invention) to 11

Denitration catalyst performance evaluation tests were performed under the test condition shown in Table 1 in the same manner as in Examples 1 (not according to the invention), 3, and 5, provided that the following points were changed from Examples 1, 3, and 5. The evaluation test was performed by using ethanol (EtOH) as a reducing agent at a concentration of 1,000 ppm, and a test exhaust gas having a NO concentration of 1,000 ppm at a concentration ratio of (reducing agent) / (NO in the exhaust gas) of 1. The results of the evaluation test of the denitration catalyst capability are shown in Table 3 below.

Comparative Examples 4 and 5

For comparison, the denitration catalyst performance evaluation test corresponding to a method for purifying a combustion exhaust gas was performed in the same manner as in Comparative Example 1, provided that the following points were changed from Comparative Example 1. The evaluation test was performed by using ethanol (EtOH) as a reducing agent at the concentration ratios of (reducing agent)/(NO in the exhaust gas) shown in Table 3 below. The results of the evaluation test of the denitration catalyst capability are shown in Table 3 below.

Table 3

| | catalyst metal/ zeolite | reducing agent | reducing agent /NO (concentration ratio) | denitration rate(%) | | |
|---|---|---|---|---|---|---|
| | | | | 200°C | 250°C | 300°C |
| Example 9* | Ag/MFI | EtOH | 1 | 31 | 47 | 52 |
| Example 10 | Bi/MFI | EtOH | 1 | 52 | 48 | 21 |
| Example 11 | Pb/MFI | EtOH | 1 | 11 | 56 | 62 |
| Comparative Example 4 | Co/MFI | EtOH | 1 | 20 | 34 | 35 |

(continued)

| | catalyst metal/ zeolite | reducing agent | reducing agent /NO (concentration ratio) | denitration rate(%) | | |
|---|---|---|---|---|---|---|
| | | | | 200°C | 250°C | 300°C |
| Comparative Example 5 | Co/MFI | EtOH | 3 | 21 | 42 | 55 |
| (not according to the invention) | | | | | | |

As shown in Tables 2 and 3, in the comparison in the denitration rate for the denitration test in Examples 1 to 11 and Comparative Examples 1 to 5 under the condition with the same concentration ratio of (reducing agent)/ (NO in the exhaust gas), it was confirmed that the denitration catalysts of the Examples exhibited higher denitration rates than the denitration catalysts of Comparative Examples in both the cases using methanol and ethanol as the reducing agent. Accordingly, it was found that a nitrogen oxide was able to be removed with a small amount of the reducing agent by making the denitration catalyst containing MFI zeolite or FER zeolite having supported thereon Ag, Bi, or Pb as a catalyst metal, into contact with a combustion exhaust gas in the presence of methanol or ethanol as a reducing agent.

Example 12

The denitration catalyst performance evaluation test corresponding to the method for purifying a combustion exhaust gas of the invention was performed by using the Bi/FER zeolite denitration catalyst in the same manner as in Example 8, provided that in this example, the evaluation test was performed by using methanol (MeOH) as a reducing agent at a concentration of 2,000 ppm, and a test exhaust gas having a NO concentration of 1,000 ppm at a concentration ratio of (reducing agent)/(NO in the exhaust gas) of 2, and changing the temperature of the denitration reaction in the denitration reactor (1) to 180°C, 200°C, 250°C, 300°C, 350°C, and 400°C. The results of the evaluation test of the denitration catalyst capability are shown in Table 4 below.

Comparative Example 6

The denitration catalyst performance evaluation test corresponding to a method for purifying a combustion exhaust gas was performed by using the Co/MFI zeolite denitration catalyst in the same manner as in Comparative Example 1, provided that the evaluation test was performed by changing the temperature of the denitration reaction in the denitration reactor (1) to 180°C, 200°C, 250°C, 300°C, 350°C, and 400°C. The results of the evaluation test of the denitration catalyst capability are shown in Table 4 below.

Table 4

| | catalyst metal/zeolite | reducing agent | reducing agent/NO (concentration ratio) | denitration rate(%) | | | | | |
|---|---|---|---|---|---|---|---|---|---|
| | | | | 180°C | 200°C | 250°C | 300°C | 350°C | 400°C |
| Example 12 | Bi/FER | MeOH | 2 | 57 | 92 | 88 | 73 | 64 | 45 |
| Comparative Example 6 | Bi/MFI | MeOH | 2 | 8 | 15 | 25 | 17 | 22 | 27 |

As apparent from the results in Table 4, the denitration tests of Example 12 according to the invention exhibited higher denitration rates than the denitration tests of Comparative Example 6, and it was understood that the denitration catalyst according to the invention had a high catalyst capability in all the reaction temperatures.

Example 13

The denitration catalyst performance evaluation test corresponding to the method for purifying a combustion exhaust gas of the invention was performed by using the Bi/FER zeolite denitration catalyst in the same manner as in Example 12, provided that in this example, the evaluation test was performed by using methanol (MeOH) as a reducing agent at a concentration of 4,000 ppm, and a test exhaust gas having a NO concentration of 1,000 ppm at a concentration ratio of (reducing agent)/(NO in the exhaust gas) of 4, and changing the temperature of the denitration reaction in the denitration reactor (1) to 400°C. The results of the evaluation test of the denitration catalyst capability are shown in Table 5 below.

Example 14

The denitration catalyst performance evaluation test corresponding to the method for purifying a combustion exhaust gas of the invention was performed by using the Bi/MFI zeolite denitration catalyst in the same manner as in Example 3, provided that in Example 14, the evaluation test was performed by using methanol (MeOH) as a reducing agent at a concentration of 1,000 ppm, and a test exhaust gas having a NO concentration of 1,000 ppm at a concentration ratio of (reducing agent) / (NO in the exhaust gas) of 1, and changing the temperature of the denitration reaction in the denitration reactor (1) to 180°C, 200°C, 250°C, 300°C, 350°C, and 400°C. The results of the evaluation test of the denitration catalyst capability are shown in Table 5 below.

Example 15 (not according to the invention)

The denitration catalyst performance evaluation test was performed by using the Ag/FER zeolite denitration catalyst in the same manner as in Example 7 by changing the temperature of the denitration reaction in the denitration reactor (1) to 180°C, 200°C, 250°C, 300°C, 350°C, and 400°C. The results of the evaluation test of the denitration catalyst capability are shown in Table 5 below.

Example 16(not according to the invention)

The denitration catalyst performance evaluation test was performed by using the Ag/MFI zeolite denitration catalyst in the same manner as in Example 1 by changing the temperature of the denitration reaction in the denitration reactor (1) to 180°C, 200°C, 250°C, 300°C, 350°C, and 400°C. The results of the evaluation test of the denitration catalyst capability are shown in Table 5 below.

Example 17

The denitration catalyst performance evaluation test corresponding to the method for purifying a combustion exhaust gas of the invention was performed by using the Pb/MFI zeolite denitration catalyst in the same manner as in Example 5, provided that the evaluation test was performed by using methanol (MeOH) as a reducing agent at a concentration of 1,000 ppm, and a test exhaust gas having a NO concentration of 1,000 ppm at a concentration ratio of (reducing agent)/(NO in the exhaust gas) of 1, and changing the temperature of the denitration reaction in the denitration reactor (1) to 180°C, 200°C, 250°C, 300°C, 350°C, and 400°C. The results of the evaluation test of the denitration catalyst capability are shown in Table 5 below.

Table 5

| | catalyst metal/ zeolite | reducing agent | reducing agent/NO (concentration ratio) | denitration rate(%) | | | | | |
|---|---|---|---|---|---|---|---|---|---|
| | | | | 180°C | 200°C | 250°C | 300°C | 350°C | 400°C |
| Example 13 | Bi/FER | MeOH | 4 | - | - | - | - | - | 80 |

(continued)

| | catalyst metal/ zeolite | reducing agent | reducing agent/NO (concentration ratio) | denitration rate(%) | | | | | |
|---|---|---|---|---|---|---|---|---|---|
| | | | | 180°C | 200°C | 250°C | 300°C | 350°C | 400°C |
| Example 14 | Bi/MFI | MeOH | 1 | 34 | 58 | 39 | 10 | 9 | 9 |
| Example 15* | Ag/FER | MeOH | 1 | 8 | 16 | 57 | 44 | 18 | 16 |
| Example 16* | Ag/MFI | MeOH | 2 | 9 | 34 | 56 | 10 | 8 | 10 |
| Example 17 | Pb/MFI | MeOH | 1 | 10 | 11 | 91 | 54 | 30 | 21 |
| *(not according to the invention) | | | | | | | | | |

Examples 18 to 20

The denitration catalyst performance evaluation test corresponding to the method for purifying a combustion exhaust gas of the invention was performed by using the Bi/MFI zeolite denitration catalyst in the same manner as in Example 10, provided that the following points were changed from Example 10. The evaluation test was performed by using ethanol (EtOH) as a reducing agent at the concentration ratios of (reducing agent)/(NO in the exhaust gas) shown in Table 6 below. The results of the evaluation test of the denitration catalyst capability are shown in Table 6 below.

Examples 21 to 23

The denitration catalyst performance evaluation test corresponding to the method for purifying a combustion exhaust gas of the invention was performed by using the Pb/MFI zeolite denitration catalyst in the same manner as in Example 11, provided that the following points were changed from Example 11. The evaluation test was performed by using ethanol (EtOH) as a reducing agent at the concentration ratios of (reducing agent)/(NO in the exhaust gas) shown in Table 6 below. The results of the evaluation test of the denitration catalyst capability are shown in Table 6 below.

Comparative Example 7

The denitration catalyst performance evaluation test corresponding to the method for purifying a combustion exhaust gas was performed by using the Co/MFI zeolite denitration catalyst in the same manner as in Comparative Example 4, provided that the following points were changed from Comparative Example 4. The evaluation test was performed by using ethanol (EtOH) as a reducing agent at the concentration ratios of (reducing agent)/(NO in the exhaust gas) shown in Table 6 below. The results of the evaluation test of the denitration catalyst capability are shown in Table 6 below.

Table 6

| | catalyst metal / zeolite | reducing agent | reducing agent /NO (concentration ratio) | denitration rate(%) | | |
|---|---|---|---|---|---|---|
| | | | | 200°C | 250°C | 300°C |
| Example 18 | Bi/MFI | EtOH | 0.2 | - | 17 | - |
| Example 19 | Bi/MFI | EtOH | 0.4 | - | 29 | - |
| Example 20 | Bi/MFI | EtOH | 0.7 | 47 | 46 | 20 |
| Example 21 | Pb/MFI | EtOH | 0.2 | - | 25 | - |
| Example 22 | Pb/MFI | EtOH | 0.4 | - | 37 | - |
| Example 23 | Pb/MFI | EtOH | 0.7 | 9 | 44 | 40 |

(continued)

| | catalyst metal / zeolite | reducing agent | reducing agent / NO (concentration ratio) | denitration rate(%) | | |
|---|---|---|---|---|---|---|
| | | | | 200°C | 250°C | 300°C |
| Comparative Example 7 | Co/MFI | EtOH | 0.7 | 14 | 24 | 31 |

Examples 24 to 26

The denitration catalyst performance evaluation test corresponding to the method for purifying a combustion exhaust gas of the invention was performed by using the Bi/FER zeolite denitration catalyst in the same manner as in Example 12, provided that the following points were changed from Example 12. The evaluation test was performed by using methanol (MeOH) as a reducing agent at the concentration ratios of (reducing agent) / (NO in the exhaust gas) shown in Table 7 below, and at the temperature of the denitration reaction in the denitration reactor (1) of 250°C. The results of the evaluation test of the denitration catalyst capability are shown in Table 7 below.

Examples 27 to 29

The denitration catalyst performance evaluation test corresponding to the method for purifying a combustion exhaust gas of the invention was performed by using the Pb/MFI zeolite denitration catalyst in the same manner as in Example 5, provided that the following points were changed from Example 5. The evaluation test was performed by using methanol (MeOH) as a reducing agent at the concentration ratios of (reducing agent)/(NO in the exhaust gas) shown in Table 7 below, and at the temperature of the denitration reaction in the denitration reactor (1) of 250°C. The results of the evaluation test of the denitration catalyst capability are shown in Table 7 below.

Comparative Example 8

The denitration catalyst performance evaluation test corresponding to the method for purifying a combustion exhaust gas was performed by using the Co/MFI zeolite denitration catalyst in the same manner as in Comparative Example 1, provided that the following points were changed from Comparative Example 1. The evaluation test was performed by using methanol (MeOH) as a reducing agent at the concentration ratios of (reducing agent)/(NO in the exhaust gas) shown in Table 7 below, and at the temperature of the denitration reaction in the denitration reactor (1) of 250°C. The results of the evaluation test of the denitration catalyst capability are shown in Table 7 below.

Table 7

| | catalyst metal / zeolite | reducing agent | reducing agent / NO (concentration ratio) | denitration rate(%) | | |
|---|---|---|---|---|---|---|
| | | | | 200°C | 250°C | 300°C |
| Example 24 | Bi/FER | MeOH | 0.2 | - | 5 | - |
| Example 25 | Bi/FER | MeOH | 0.4 | - | 13 | - |
| Example 26 | Bi/FER | MeOH | 0.7 | - | 24 | - |
| Example 27 | Pb/MFI | MeOH | 0.2 | - | 10 | - |
| Example 28 | Pb/MFI | MeOH | 0.4 | - | 24 | - |
| Example 29 | Pb/MFI | MeOH | 0.7 | - | 42 | - |
| Comparative Example 8 | Co/MFI | MeOH | 0.7 | - | 11 | - |

**Claims**

1.  . A method for purifying a combustion exhaust gas containing making a combustion exhaust gas having an alcohol added thereto as a reducing agent, into contact with a de-nitration catalyst containing a catalyst support containing MFI zeolite or FER zeolite,

having supported thereon, Bi, or Pb, at a temperature of from 200 to 300 °C, so as to remove a nitrogen oxide in the exhaust gas.

2. . The method for purifying a combustion exhaust gas according to claim 1 , wherein the reducing agent is added to the combustion exhaust gas at a ratio of from 0.1 to 4 in terms of concentration ratio of (reducing agent)/(NOx in the exhaust gas).

3. . The method for purifying a combustion exhaust gas according to claim 1 or 2, wherein the catalyst support is a honeycomb structure formed with an inorganic fiber sheet having supported thereon zeolite.


**Patentansprüche**

1. Verfahren zum Reinigen eines Verbrennungsabgases, bei dem ein Verbrennungsabgas, dem ein Alkohol als Reduktionsmittel zugesetzt wurde, mit einem De-Nitrierungskatalysator bei einer Temperatur von 200 bis 300 °C in Kontakt gebracht wird, wobei der Katalysator einen Katalysatorträger enthält welcher MFI-Zeolith oder FER-Zeolith mit Bi oder Pb darauf getragen enthält, um ein Stickoxid im Abgas zu entfernen.

2. Verfahren zur Reinigung eines Verbrennungsabgases nach Anspruch 1, wobei das Reduktionsmittel dem Verbrennungsabgas in einem Verhältnis von 0,1 bis 4, bezogen auf das Konzentrationsverhältnis (Reduktionsmittel)/(NO$_x$ im Abgas), zugesetzt wird.

3. Verfahren zum Reinigen eines Verbrennungsabgases nach Anspruch 1 oder 2, wobei der Katalysatorträger eine Wabenstruktur ist, die aus einer anorganischen Faserplatte mit darauf getragenem Zeolith besteht.


**Revendications**

1. Un procédé de purification d'un gaz d'échappement de combustion comprenant le fait de mettre en contact un gaz d'échappement de combustion auquel est ajouté un alcool en tant qu'agent réducteur avec un catalyseur de dénitration contenant un support de catalyseur contenant une zéolite MFI ou une zéolite FER, ayant, supporté sur elle, du Bi ou du Pb, à une température de 200 à 300°C, de manière à éliminer un oxyde d'azote dans le gaz d'échappement.

2. Le procédé de purification d'un gaz d'échappement de combustion selon la revendication 1, dans lequel l'agent réducteur est ajouté au gaz d'échappement de combustion dans un rapport allant de 0,1 à 4 en termes de rapport de concentration (agent réducteur)/(NOx dans le gaz d'échappement).

3. Le procédé de purification d'un gaz d'échappement de combustion selon la revendication 1 ou la revendication 2, dans lequel le support de catalyseur est une structure en nid d'abeille formée d'une feuille de fibres inorganiques sur laquelle est supportée une zéolite.

FIG. 1

AIR   NO/N$_2$

EXHAUST GAS ⟵ ⟶ GAS ANALYSIS

DISCHARGED WATER

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003284956 A
- EP 1314476 A1
- JP 2004358454 A
- JP 2006220107 A